# EUROPÄISCHE PATENTSCHRIFT

(11) **EP 0 916 049 B1**
(45) Veröffentlichungstag und Bekanntmachung des Hinweises auf die Patenterteilung: **06.05.2004**
(21) Anmeldenummer: 98929432.7
(22) Anmeldetag: 09.06.1998
(51) Int. Cl.: F16K 31/06, F16K 31/08

(54) **MINIATURISIERTES MAGNETVENTIL**
MINIATURIZED MAGNETIC VALVE
ELECTRO-VANNE MINIATURISEE

(30) Priorität: 09.06.1997 DE 29710020 U
(43) Veröffentlichungstag der Anmeldung: 19.05.1999
(73) Patentinhaber: Bürkert Werke GmbH & Co., D-74653 Ingelfingen (DE)
(72) Erfinder: DETTMANN, Heinrich, D-74676 Niedernhall (DE)
(74) Vertreter: Degwert, Hartmut, Dipl.-Phys.
(86) Internationale Anmeldenummer: PCT/EP1998/003442
(87) Internationale Veröffentlichungsnummer: WO 1998/057081

(56) Entgegenhaltungen:
- EP-A- 0 376 894
- DE-A- 3 528 072
- DE-A- 4 139 947
- DE-A- 4 314 581
- DE-C- 3 513 282

## Beschreibung

Die Erfindung betrifft ein miniaturisiertes Magnetventil mit einem allgemein quaderförmigen Gehäuse, das einen Magnetantrieb und einen von diesem getrennten Fluidraum aufnimmt.

Fluidische und elektrische oder elektronische Steuerkreise werden nach dem aktuellen Stand der Technik getrennt aufgebaut. So werden Magnetventile einer fluidischen Anlage über Busleitungen oder gesonderte elektrische Verbindungsleitungen mit elektrischen oder elektronischen Steuerkreisen verbunden. Zwar können Elektronikbauteile in Magnetventile integriert werden, jedoch stehen keine Magnetventile zur Integration in elektrische oder elektronische Schaltkreise zur Verfugung.

Aus der DE-A-43 14 581 ist ein Mikroventil mit einem Gehäuse bekannt, das einen Magnetantrieb und einen von diesem getrennten Fluidraum aufnimmt. Als Betätigungselement ist gemäß einer ersten Ausführungsform ein mit dem Magnetantrieb zusammenwirkender Flach-Schieberkörper vorgesehen. Der Magnetantrieb kann mittels aus dem Gehäuse herausgeführter elektrischer Anschlüsse von der Außenseite des Gehäuses her elektrisch kontaktiert werden.

Durch die Erfindung wird ein miniaturisiertes Magnetventil geschaffen, das zur Integration in elektrische oder elektronische Schaltkreise geeignet ist. Gemäß der Erfindung, ist ein Magnetventil mit den im kennzeichnenden Teil von Patentanspruch 1 angegebenen Merkmalen vorgesehen.

Für die Integration in elektrischen oder elektronischen Schaltkreisen ist es besonders zweckmäßig, das Magnetventil impulsgesteuert bistabil oder monostabil auszubilden. Zu diesem Zweck weist der Magnetantrieb einen zwischen zwei Weicheisenteilen beweglichen Permanentmagnet und eine Magnetspule auf, deren durch einen Stromimpuls erzeugtes Magnetfeld den Permanentmagnet je nach Polarität des Magnetfeldes gegen das eine oder andere Weicheisenteil bewegt. Ohne Vorbelastung in die eine oder andere Schaltstellung ist ein solches Magnetventil in jeder Schaltstellung stabil. Durch Hinzufugen einer Vorspannfeder wird das Magnetventil zu einem impulsgesteuerten monostabilen Ventil.

Um das Schaltverhalten des erfindungsgemäßen Magnetventils zu optimieren, ist eine Ansteuerschaltung vorgesehen, die für jede Betätigung einen Stromimpuls liefert, der beendet ist, bevor die jeweilige Umschaltstellung erreicht ist. Dadurch ist bei optimaler Schaltgeschwindigkeit zugleich eine weitgehende Prellfreiheit gesichert, mit der Folge, daß die gewünschten Schaltstellungen sicher eingenommen werden.

Die fluidischen Anschlüsse des erfindungsgemäßen Magnetventils befinden sich vorzugsweise an der der Grundfläche gegenüberliegenden Oberseite des Gehäuses und sind so für das Aufstecken von Verbindungsschläuchen leicht zugänglich.

Bei der bevorzugten Ausführungsform hat das Gehäuse des Magnetventils eine langgestreckte Bauform. Die Breite des Gehäuses beträgt beispielsweise nur wenig mehr als 5 mm. Der Fluidraum ist an dem einen und der Magnetantrieb an dem gegenüberliegenden Längsende des Gehäuses angeordnet. Eine Betätigungslamelle erstreckt sich vom Magnetantrieb zum Fluidraum. Diese Betätigungslamelle ist vorzugsweise nahe dem Fluidraum mittels einer Umhüllung aus elastischem Material schwenkbar im Gehäuse eingespannt. Durch diese Ausbildung bildet die Betätigungslamelle einen Hebel mit großem Übersetzungsverhältnis. Das Magnetventil kann daher mit geringen Schaltkräften arbeiten und dennoch relativ hohe Drücke bis etwa 8 Bar schalten.

Weitere Einzelheiten und Merkmale der Erfindung ergeben sich aus der folgenden Beschreibung einer bevorzugten Ausführungsform und aus der Zeichnung, auf die Bezug genommen wird. In der Zeichnung zeigen:
Fig. 1 einen schematischen Längsschnitt des miniaturisierten Magnetventils;
Fig. 2 eine schematische Perspektivansicht auf die Grundfläche des Magnetventils;
Fig. 3 eine schematische Perspektivansicht auf die Oberseite des Magnetventils;
Fig. 4 ein Diagramm zur Veranschaulichung der Arbeitsweise des Magnetventils.

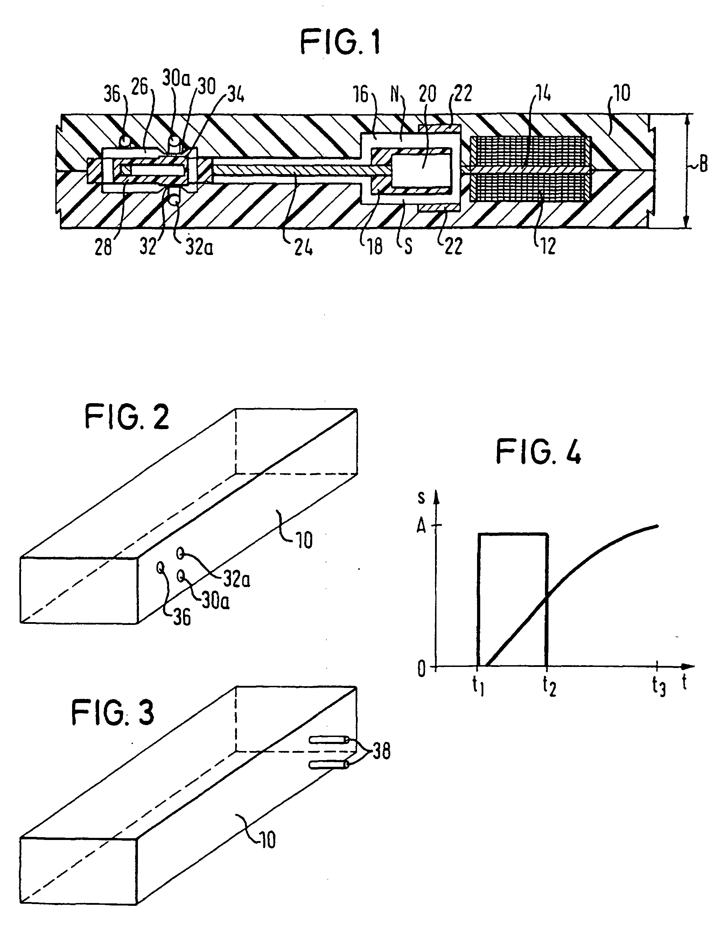

Das Magnetventil weist ein langgestrecktes, schmales, aus zwei zusammengefügten Hälften bestehendes, quaderförmiges Gehäuse 10 auf. An einem Längsende des Gehäuses 10 ist ein Magnetantrieb mit einer Magnetspule 12 und einem von dieser umgebenen Kern 14 angeordnet. Neben der inneren Stirnfläche der Magnetspule 12 und des Magnetkerns 14 befindet sich ein Raum 16, in dem ein von einer Elastomerumhüllung 18 umgebener Permanentmagnet 20 zwischen zwei Weicheisenteilen 22 beweglich angeordnet ist. Der Permanentmagnet 20 ist am einen Ende einer langgestreckten Betätigungslamelle 24 angeschlossen. Das andere Ende der Betätigungslamelle 24 ragt in einem Fluidraum 26, an dem dem Magnetantrieb gegenüberliegenden Längsende des Gehäuses 10. Ein Rahmen 28 aus Elastomermaterial ist zwischen den zwei Hälften des Gehäuses 10 eingespannt und mit dem benachbarten Ende der Betätigungslamelle 24 verbunden. Die Betätigungslamelle 24 ist an ihrem dem Fluidraum 26 benachbarten Ende durch das sie umgebende Elastomermaterial des Rahmens 28 schwenkbar am Gehäuse 10 eingespannt. Zugleich wird durch den eingespannten Rahmen 28 aus Elastomermaterial der Fluidraum 26 von dem Raum 16 abgedichtet. In dem Fluidraum 26 sind zwei einander gegenüberliegende Dichtsitze 30, 32 gebildet, zwischen denen das durch die Betätigungslamelle 24 bewegte Schließelement 34 am Rahmen 28 aus Elastomermaterial beweglich ist. Aus dem Fluidraum 26 sind drei fluidische Anschlüsse 30a, 32a und 36 zur Oberseite des Gehäuses 10 herausgeführt, wie in Fig. 2 schematisch gezeigt. An der Grundfläche des Gehäuses 10 ragen zwei mit der Magnetspule 12 elektrisch verbundene Lötstifte 38 heraus, wie in Fig. 3 gezeigt ist.

Form und Größe des Gehäuses 10 sowie die Anordnung der Lötstifte 38 an seiner Grundfläche sind passend für übliche Rastermaße auf ge-. druckten Schaltungskarten ausgebildet. Die Breite B des Gehäuses 10 beträgt beispielsweise lediglich 5,5 mm. Die fluidischen Anschlüsse 32a, 30a, 36 sind an der Oberseite des Gehäuses 10 leicht zugänglich. Sie können als Steckanschlüsse, Schlauchnippel oder dergleichen ausgebildet sein.

Der Permanentmagnet 20 ist in Fig. 1 in einer Zwischenstellung zwischen den Weicheisenteilen 20, 22 dargestellt. In diesem Zustand ist der Magnetantrieb aber nicht stabil. Durch das Zusammenwirken des Permanentmagneten 20 mit den Weicheisenteilen 22 nimmt der Permanentmagnet 20 eine von zwei stabilen Lagen ein, nämlich in Anlage an jeweils einem der Weicheisenteile 22. Diese Weicheisenteile 22 sind dünne Plättchen, die in das Gehäuse 10 eingelassen, z.B. eingespritzt sind, wenn das Gehäuse aus Kunststoff besteht. Durch die Anordnung der Magnetspule 12 mit ihrer Achse in der Mittelebene des Gehäuses 10 wird bei Stromfluß ein Magnetfeld erzeugt, das mit dem Permanentmagnet 20 zusammenwirkt und diesen je nach Magnetflußrichtung in die eine oder andere Schaltstellung bewegt. Die Magnetflußrichtung wiederum wird durch die Polung eines an die Magnetspule 12 angelegten elektrischen Impulses bestimmt.

Für die Ansteuerung des Magnetventils ist eine Ansteuerschaltung vorgesehen, die jeweils nur kurze Schaltimpulse abgibt. Die Dauer der Schaltimpulse ist so gewählt, daß die Krafteinwirkung auf den Permanentventil 20 endet, bevor dieser seine Schaltstellung erreicht hat. Wenn der Permanentmagnet 20 zwischen seinen Schaltstellungen die Strecke 0A überwinden muß und der elektrische Ansteuerimpuls beispielsweise im Zeitpunkt t₁ beginnt, wie in Fig. 4 veranschaulicht, so endet der Ansteuerimpuls im Zeitpunkt t₂ beispielsweise schon, bevor etwa die halbe Wegstrecke zurückgelegt ist; erst in Zeitpunkt t₃ wird die Schaltstellung erreicht. Die Bewegung des Permanentmagneten 20 über den Zeitpunkt t₂ hinaus wird daher nicht weiter beschleunigt, so daß bei Erreichen der Schaltstellung im Zeitpunkt t₃ dem Abprellen aus der erreichten Schaltstellung vorgebeugt wird. Die Dauer t₂-t₁ eines Ansteuerimpulses beträgt beispielsweise etwa 20 ms.

## Patentansprüche

1. Miniaturisiertes Magnetventil mit einem allgemein quaderförmigen Gehäuse (10), das einen Magnetantrieb (12, 14) und einen von diesem getrennten Fluidraum (26) aufnimmt, wobei an einer Grundfläche des Gehäuses (10) mit dem Magnetantrieb (12) elektrisch verbundene Lötstifte (38) herausragen, **dadurch gekennzeichnet, daß** der Magnetantrieb (12, 14) einen zwischen zwei Weicheisenteilen (22) beweglichen Permanentmagnet (20) und eine Magnetspule (12) aufweist, deren durch einen Stromimpuls erzeugtes Magnetfeld den Permanentmagnet (20) je nach Polarität des Magnetfeldes gegen das eine oder das andere Weicheisenteil (22) bewegt, und daß dem Magnetventil eine Ansteuerschaltung zugeordnet ist, die für jede Betätigung einen Stromimpuls liefert, der beendet ist, bevor die jeweilige Umschaltstellung erreicht ist.

2. Magnetventil nach Anspruch 1, **dadurch gekennzeichnet, daß** an der der Grundfläche gegenüberliegenden Oberseite des Gehäuses (10) fluidische Anschlüsse (30a, 32a, 36) aus dem Fluidraum (26) herausgeführt sind.

3. Magnetventil nach Anspruch 1 oder 2, **dadurch gekennzeichnet, daß** das Gehäuse (10) eine langgestreckte Bauform aufweist, daß der Fluidraum (26) an dem einen und der Magnetantrieb (12, 14) an dem anderen Längsende des Gehäuses (10) angeordnet ist und daß sich eine Betätigungslamelle (24) von dem Magnetantrieb (12, 14) zum Fluidraum (26) erstreckt.

4. Magnetventil nach Anspruch 3, **dadurch gekennzeichnet, daß** die Betätigungslamelle (24) nahe dem Fluidraum (26) mittels einer Umhüllung aus elastischem Material schwenkbar im Gehäuse (10) eingespannt ist.

5. Magnetventil nach einem der Ansprüche 1 bis 4, **dadurch gekennzeichnet, daß** der Magnetantrieb (12, 14) zwei stabile Schaltstellungen annehmen kann.

6. Magnetventil nach einem der Ansprüche 1 bis 4, **dadurch gekennzeichnet, daß** der Permanentmagnet (20) durch Federkraft in eine von zwei Schaltstellungen vorbelastet ist und eine stabile Schaltstellung aufweist.

## Claims

1. A miniaturized solenoid valve, comprising a generally parallelepiped housing (10) which accommodates a solenoid drive (12, 14) and a fluidic space (26) separated therefrom, with soldering pins (38) that are electrically connected to the solenoid drive (12) protruding from a base surface of the housing (10), **characterized in that** the solenoid drive (12, 14) has a permanent magnet (20) which is movable between two soft iron parts (22), and a solenoid (12) whose current-pulse induced magnetic field moves the permanent magnet (20) against the one or the other soft iron part (22), depending on the polarity of the magnetic field, and that associated with the solenoid valve is a drive circuit which for each actuation supplies a current pulse which terminates before the respective changeover position is reached.

2. The solenoid valve according to claim 1, **characterized in that** at the top side of the housing (10), opposite the base surface, fluidic connectors (30a, 32a, 36) lead out of the fluidic space (26).

3. The solenoid valve according to claim 1 or 2, **characterized in that** the housing (10) is of elongated construction, that the fluidic space (26) is arranged at one longitudinal end of the housing (10) and the solenoid drive (12, 14) at the other, and that an actuating lamina (24) extends from the solenoid drive (12, 14) to the fluidic space (26).

4. The solenoid valve according to claim 3, **characterized in that** the actuating lamina (24) is pivotally clamped in the housing (10) near the fluidic space (26) by means of a jacket made of an elastic material.

5. The solenoid valve according to any of claims 1 to 4, **characterized in that** the solenoid drive (12, 14) can assume two stable switching positions.

6. The solenoid valve according to any of claims 1 to 4, **characterized in that** the permanent magnet (20) is biased by spring force into one of two switching positions and has a stable switching position.

## Revendications

1. Valve magnétique miniaturisée, comportant un boîtier (10) de forme généralement parallélépipédique qui loge un entraînement magnétique (12, 14) et un espace fluidique (26) séparé de celui-ci, des plots de soudure (38) reliés électriquement à l'entraînement magnétique faisant saillie depuis une surface de base du boîtier (10), **caractérisée en ce que** l'entraînement magnétique (12, 14) présente un aimant permanent (20) mobile entre deux parties en fer doux (22), et une bobine magnétique (12) dont le champ magnétique engendré par une impulsion de courant déplace l'aimant permanent (20) à l'encontre de l'une ou l'autre partie en fer doux (22) en fonction de la polarité du champ magnétique, et **en ce qu'**à chaque valve magnétique est associé un circuit de pilotage qui fournit pour chaque actionnement une impulsion de courant qui se termine avant d'atteindre la position de commutation respective.

2. Valve magnétique selon la revendication 1, **caractérisée en ce que** sur la face supérieure du boîtier (10), qui est opposée à la surface de base, des raccords fluidiques (30a, 32a, 36) sortent de l'espace fluidique (26).

3. Valve magnétique selon la revendication 1 ou 2, **caractérisée en ce que** le boîtier (10) présente une structure allongée, **en ce que** l'espace fluidique (26) est agencé sur une extrémité longitudinale du boîtier (10) et l'entraînement magnétique (12, 14) sur l'autre, et **en ce qu'**une lamelle d'actionnement (24) s'étend depuis l'entraînement magnétique (12, 14) jusqu'à l'espace fluidique (26).

4. Valve magnétique selon la revendication 3, **caractérisée en ce que** la lamelle d'actionnement (24) est serrée à pivotement dans le boîtier (10) près de l'espace fluidique (26) au moyen d'une enveloppe en matériau élastique.

5. Valve magnétique selon l'une des revendications 1 à 4, **caractérisée en ce que** l'entraînement magnétique (12, 14) peut adopter deux positions de commutation stables.

6. Valve magnétique selon l'une des revendications 1 à 4, **caractérisée en ce que** l'aimant permanent (20) est précontraint par force de ressort dans une de deux postions de commutation et présente une position de commutation stable.
